# FASCICULE DE BREVET EUROPEEN

(11) **EP 0 449 688 B1**
(45) Date de publication et mention de la délivrance du brevet: **01.06.1994**
(21) Numéro de dépôt: 91400636.6
(22) Date de dépôt: 07.03.1991
(51) Int. Cl.: B60N 2/02, F16H 1/22

(54) **Dispositif de commande motorisée d'un ensemble d'éléments tels que les parties réglables d'un siège de véhicule**
Motorgetriebene Vorrichtung zur Verstellung eines Satzes von Elementen, insbesondere der verstellbaren Teile eines Fahrzeugsitzes
Motor driven apparatus for a set of elements, especially the adjustable parts of a vehicle seat

(30) Priorité: 27.03.1990 FR 9003909
(43) Date de publication de la demande: 02.10.1991
(73) Titulaire: ROCKWELL BODY AND CHASSIS SYSTEMS - FRANCE, en abrégé: ROCKWELL BCS - FRANCE, 92082 Paris La Défense 2 (FR)
(72) Inventeur: Periou, Pierre, F-95000 Cergy Pontoise (FR)
(74) Mandataire: Martin, Jean-Paul

(56) Documents cités:
- DE-A- 3 825 020
- FR-A- 2 546 252
- FR-A- 2 561 341
- US-A- 2 922 462
- US-A- 2 931 424
- US-A- 3 001 756

## Description

La présente invention a pour objet un dispositif de commande motorisée d'un ensemble d'éléments tels que des parties réglables d'un siège de véhicule : réglage longitudinal de l'assise du siège, rehausse avant et rehausse arrière, articulation du dossier, réglage de l'appui-tête en hauteur et de l'avant vers l'arrière...

Pour de telles applications dans un véhicule, on a utilisé des moteurs pourvus de réducteurs multiples délivrant en sortie trois ou quatre prises de force qui commandent par embrayage, les fonctions demandées. Ces sorties à haut couple et basse vitesse exigeaient entre le moteur et l'utilisateur, une liaison par arbre tournant rigide et lourd.

L'implantation sous un siège ne permettait que de commander les fonctions alors demandées : réglage longitudinal du siège sur les glissières, rehausse avant, rehausse arrière et parfois inclinaison du dossier.

La transmission du mouvement avec ce type de dispositif à basse vitesse et force élevée, requiert des moyens lourds, onéreux et encombrants. Ces solutions ont été rendues non compétitives par la réduction du coût des moteurs, qui a conduit à l'utilisation d'un moteur par fonction. Par ailleurs, l'évolution de la demande des utilisateurs vers des sièges toujours plus confortables, tend à augmenter le nombre des fonctions motorisées. Ainsi actuellement, en plus des fonctions classiques de réglage longitudinal sur glissières, rehausse avant et rehausse arrière de l'assise, inclinaison du dossier, de nouvelles fonctions sont souvent demandées : double réglage de l'appui-tête vers l'avant et vers l'arrière, et en hauteur, réglage dorsal (support lombaire), appui mobile pour les cuisses du conducteur à l'avant de l'assise, et ailes latérales de coussin ajustables. En outre, la mémorisation des positions pour chaque fonction est souvent exigée.

La solution actuellement utilisée consiste à mettre en oeuvre un moteur par fonction. Elle conduit donc à des systèmes onéreux, encombrants et par conséquent difficiles à loger dans les espaces réduits d'un véhicule. Ces systèmes sont difficilement accessibles et impliquent une multiplicité de connexions pour chacun des moteurs et des fonctions mémorisées.

L'invention a donc pour but de proposer un dispositif de commande motorisée ne présentant pas ces inconvénients.

Suivant l'invention, le dispositif de commande motorisée d'un ensemble d'éléments tels que les parties réglables d'un siège de véhicule, comprend:
- au moins un moteur muni d'un arbre de sortie portant deux vis coaxiales, décalées axialement sur l'arbre de sortie et à pas de vis opposés, ces vis formant l'entrée du dispositif,
- des paires de roues engrenant avec les vis et deux à deux entre elles,
- un arbre de sortie traversant librement chaque roue, et destiné à commander un élément associé, par l'une ou l'autre de ses extrémités opposées,
- sur chaque arbre et en regard de chaque roue, un embrayage indépendant des autres embrayages et adapté pour pouvoir lier en rotation l'arbre choisi à la roue correspondante, l'ensemble des roues, des arbres et des embrayages associés formant un répartiteur de fonctions.

Le dispositif ainsi réalisé forme un ensemble compact capable de distribuer à partir d'un boîtier répartiteur léger des fonctions multiples et assurant la commutation des fonctions, l'information position de chacune d'elles ainsi qu'une connexion unique simplifiée.

Il existe différents moyens connus pour entraîner quatre arbres de sortie à partir d'une entrée unique : courroies, vis sans fin, engrenages...

La transmission par vis sans fin est la plus adaptée pour des raisons d'encombrement, mais elle génère des efforts axiaux sur la vis. Pour éviter ceux-ci, il est connu, par exemple, des documents FR-A-2 546 252 et FR-A-2 561 341 d'utiliser une double vis à pas opposés.

Ceci supprime les appuis axiaux nécessaires dans le cas d'une simple vis, ainsi que les pertes et usures correspondantes.

Suivant d'autres particularités de l'invention :
- chaque embrayage comporte un manchon coaxial à l'arbre, solidaire en rotation de celui-ci et monté coulissant axialement entre la roue associée et une butée fixée à l'arbre, ainsi qu'un organe élastique sollicitant constamment le manchon en coulissement axial d'une position désolidarisée avec la roue vers une position embrayée avec la roue, cet embrayage étant équipé en outre d'un moyen de retenue du manchon dans sa position débrayée, tel qu'une fourchette mobile axialement,
- le manchon est lié en rotation à l'arbre par un système de cannelures axiales complémentaires agencées sur l'arbre et dans le manchon,
- la roue est munie d'un crabot d'embrayage du manchon sur la roue.

D'autres particularités et avantages de l'invention apparaîtront au cours de la description qui va suivre, faite en référence aux dessins annexés qui en illustrent plusieurs formes de réalisation à titre d'exemples non limitatifs.

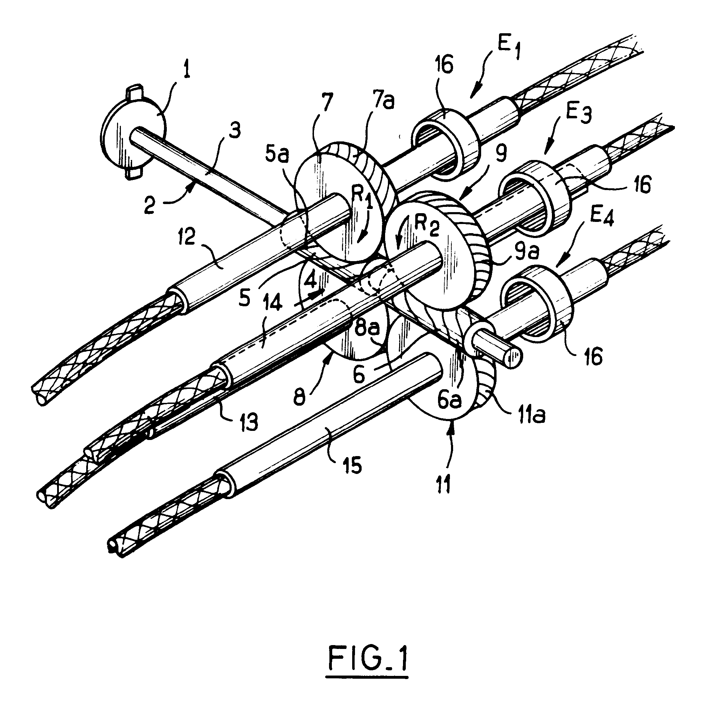

Le dispositif représenté à la Fig.1 est destiné à la commande motorisée d'un ensemble d'éléments non représentés, tels que les différentes parties réglables d'un siège de véhicule (réglage longitudinal, rehausses avant et arrière, articulation du dossier, etc).

Il comprend les organes suivants :
- un moteur électrique 1 muni d'un arbre de sortie 2 constitué d'un câble tournant souple 3 relié à la sortie proprement dite du moteur 1, et d'un arbre rigide 4 ; ce dernier, fixé au câble 3, porte deux vis coaxiales 5 et 6, décalées axialement sur cet arbre 4 et ayant des filetages 5a, 6a à pas de vis opposés, ces vis 5, 6 formant l'entrée du dispositif,
- deux paires de roues 7, 8 et. 9, 11 munies chacune d'un filetage 7a, 8a, 9a, 11a pouvant engrener avec les filetages correspondants des vis 5, 6, ces roues étant à cet effet disposées de part et d'autre des vis 5, 6 à raison d'une paire de chaque côté,
- un arbre 12, 13, 14, 15 traversant librement une roue respective 7, 8, 9 et 11, ces arbres étant destinés à commander un élément associé non représenté, par l'une ou l'autre de ses extrémités opposées,
- sur chaque arbre 12, 13, 14, 15 et en regard de chaque roue correspondante 7, 8, 9, 11, un embrayage E1, E2, E3, E4 (l'embrayage E2 n'étant pas visible); chaque embrayage est indépendant des autres embrayages et adapté pour pouvoir lier en rotation l'arbre choisi (12 ou 13 ou 14 ou 15) à la roue correspondante, l'ensemble des roues, des arbres et des embrayages associés formant un répartiteur de fonctions.

Dans l'exemple décrit, deux roues filetées 7, 8 engrènent avec la vis 5 par rapport à laquelle elles sont diamétralement opposées, et de même pour les roues filetées 9, 11 vis-à-vis de la vis 6. Les deux roues situées d'un même côté des vis 5, 6 engrènent entre elles : les roues 7 et 9 sont donc en prise l'une avec l'autre et tournent en sens opposés (flèches R1 et R2, Fig.1) lorsque l'arbre 2 tourne dans un sens donné.

Chaque arbre de sortie 12, 13, 14, 15 est formé, de manière connue en soi, par un câble souple tournant, logé dans une enveloppe cylindrique.

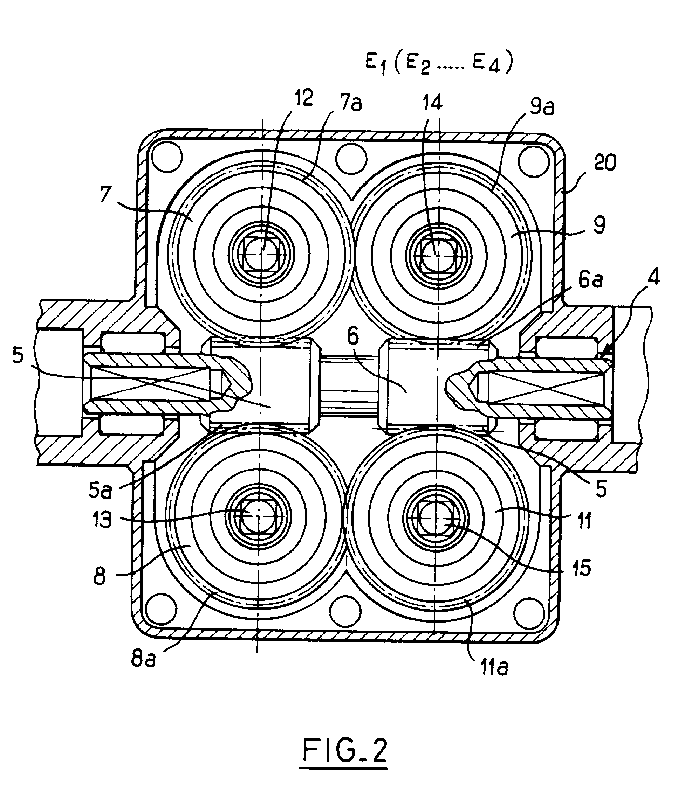

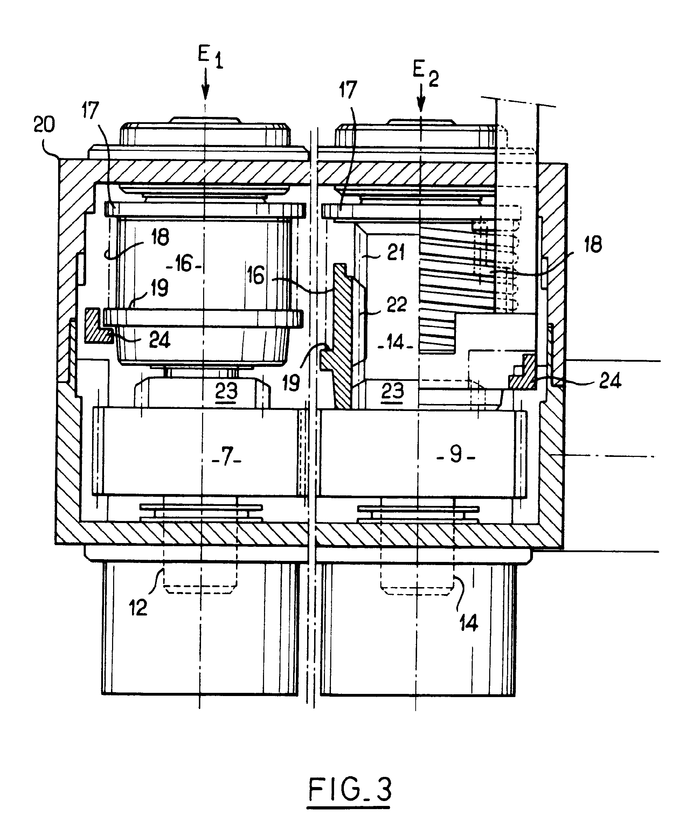

On décrira maintenant un embrayage (E1 ou E2,...) en référence aux Fig.2 et 3.

Un embrayage comporte un manchon 16 coaxial à l'arbre de support respectif (12, 13, 14, 15), solidaire en rotation de celui-ci, et monté coulissant axialement sur cet arbre entre la roue associée 7 (9, 8, 11) et une butée 17 fixée à l'arbre 12 (14,...). Chaque embrayage E1, E3,... est également muni d'un organe élastique 18 sollicitant constamment le manchon 16 en coulissement axial à partir d'une position dans laquelle il est désolidarisé ou débrayé de la roue associée telle que 7 (position du manchon 16 de l'embrayage E1 sur la Fig.3) vers une position embrayée avec la roue, comme on le voit pour l'embrayage E3 (Fig.3). Dans l'exemple décrit, l'organe élastique de rappel du manchon 16 vers sa position embrayée avec la roue est un ressort hélicoïdal enveloppant l'arbre support (12, 14...) et comprimé entre la butée 17, constituée par un épaulement annulaire fixé à l'arbre 12, 14, et un appui annulaire 19 faisant saillie radialement du manchon 16. Dans chaque embrayage ce dernier est lié en rotation à l'arbre support 12, 14,..., par exemple comme représenté par un système de cannelures axiales complémentaires 21, 22 respectivement agencées sur l'arbre 12, 14,... et dans le manchon 16.

Chaque roue telle que 7, 9 est munie, du côté du manchon 16, d'un crabot 23 sur lequel peut venir s'emboîter le manchon 16 en position d'embrayage sur la roue 7, 9,... (position de l'embrayage E3 sur la Fig.3). Chaque embrayage E1, E3,... est de plus équipé d'un moyen de retenue du manchon 16 dans sa position débrayée, par exemple comme connu en soi, une fourchette 24 déplaçable axialement et profilée pour s'emboîter sur l'épaulement radial 19 du manchon 16.

Le fonctionnement d'un embrayage E1, E3... est le suivant.
a) En position débrayée, comme représenté pour l'embrayage E1 (Fig.3), la fourchette 24 comprime le ressort 18 et maintient le manchon 16 débrayé du crabot 23, à une certaine distance de la roue 7, le manchon 16 étant en butée axialement contre l'épaulement 17. Dans cet état de l'embrayage E1, la rotation de la vis 5 entraîne la roue 7 mais non l'arbre 12 traversant celle-ci, cet arbre restant donc immobile ainsi que le manchon 16 et le ressort 18.
b) En position embrayée (embrayage E3 sur la Fig.3) la fourchette 24 a été déplacée axialement jusqu'au niveau du crabot 23 et libère donc le manchon 16. Ce dernier poussé par le ressort 18 coulisse sur l'arbre 14 et son nez, adapté au crabot 23, vient s'emboîter sur celui-ci. De ce fait le manchon 16 et l'arbre 14 dont il est solidaire en rotation, sont alors liés en rotation avec la roue 9, elle-même entrainée en rotation par la vis 6.

Les efforts du ressort 18 sont internes à cet ensemble, aucun frottement n'étant généré entre les différentes pièces.

Chaque fourchette 24 peut évidemment être commandée indépendamment des autres, de sorte que chaque embrayage est ainsi indépendant des trois autres, et peut être commandé à volonté à partir de l'arbre d'entrée 2 entraîné en rotation dans un sens ou dans l'autre par le moteur 1.
- Chaque arbre de sortie 12, 13,... peut être utilisé pour commander l'élément associé soit par l'une seulement de ses extrémités, soit par les deux extrémités, de manière connue en soi.
- Comme déjà indiqué, l'agencement des deux vis 5, 6 axialement décalées et à pas de vis opposé sur le même arbre 4, génère des efforts axiaux repris par les vis et qui par conséquent s'annulent. La suppression des paliers classiques de reprise des efforts axiaux, outre les avantages déjà mentionnés, procure un gain de rendement au dispositif, diminue son poids ainsi que son encombrement.
- Lorsqu'un embrayage est en position embrayée (E3, Fig.3) les efforts ne sont développés qu'entre des pièces qui tournent toutes ensemble. Par ailleurs, les deux roues 7 et 9 d'une part, 8 et 11 d'autre part, engrènent ensemble, de sorte que chaque roue est entraînée par des efforts répartis entre la vis 5 (6) et la roue 7 (9) et entre les deux roues 7, 9 ou 8, 11. Ceci permet de réduire les dimensions des dentures des roues et des vis, donc l'encombrement général du répartiteur.

L'ensemble des quatre embrayages E1, E2, E3, E4 est logé dans ion carter 20 dans lequel sont agencées des ouvertures de passage pour les arbres flexibles 12, 13, 14 et 15. Ces derniers peuvent être utilisés en doubles sorties, par leurs deux extrémités opposées, pour remplir une fonction à deux endroits, par exemple la commande des glissières du siège d'un véhicule.
- Un autre avantage du dispositif selon l'invention réside dans le fait qu'il permet une centralisation des capteurs de mémorisation des positions des éléments commandés, pour chaque utilisateur par mémorisation suivant un procédé connu du nombre de tours de chaque arbre correspondant à un réglage choisi par un utilisateur (par exemple réglage de l'inclinaison du dossier, réglage de la position du siège sur les glissières...). En effet, jusqu'à présent pour chaque fonction il faut un moteur avec des fils qui localisent la fonction de mémorisation sur chaque élément pris séparément.

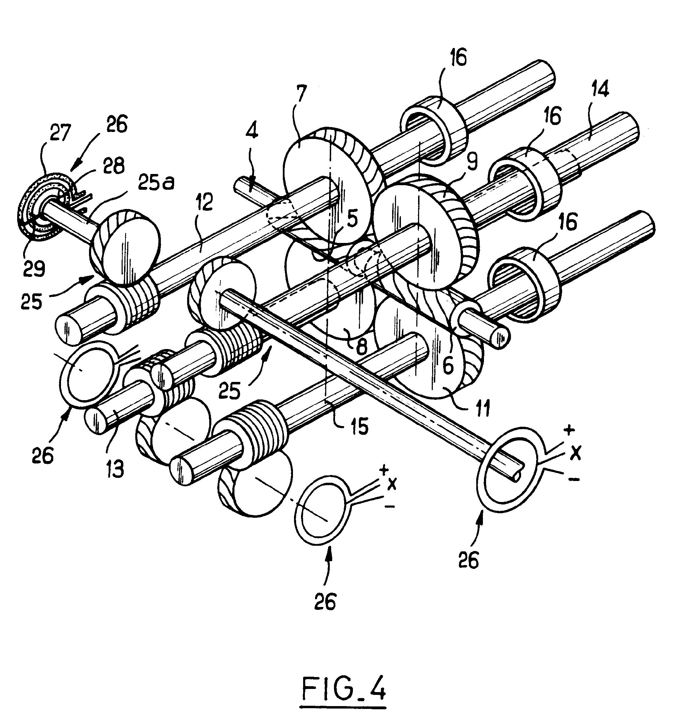

Dans le mode de réalisation représenté à la Fig.4, le dispositif comprend, outre les quatre embrayages E1-E4 précédemment décrits, un système potentiométrique coopérant avec chaque arbre 12...15. Chaque arbre de sortie est ainsi relié à un réducteur 25 de commande d'un potentiomètre 26 pouvant délivrer une information indiquant la position de l'élément correspondant (non représenté). L'arbre 25a de chaque réducteur 25 est disposé coaxialement à deux pistes électriques circulaires 27, 28 du potentiomètre 26, et porte un curseur 29 à deux pattes en contact glissant avec les pistes 27 et 28. La piste extérieure 27 est reliée par ses extrémités opposées aux bornes plus et moins de la source de courant continu. Toutes les bornes plus des pistes 27 sont reliées par un fil unique, et toutes leurs bornes moins sont reliées par un autre fil unique (ces deux fils n'étant pas représentés à la Fig.4 pour ne pas surcharger le dessin). Dans ces conditions, grâce à cet agencement, on obtient une réduction importante du nombre des connexions nécessaires par rapport à un système classique, impliquant une dissémination des différents potentiomètres dans le véhicule. En effet dans un tel système antérieur, il faut trois fils de connexion par potentiomètre, soit douze au total pour quatre potentiomètres, alors que dans le système selon l'invention, six fils au total suffisent (un fil par potentiomètre et deux fils de liaison reliant les plus et les moins).

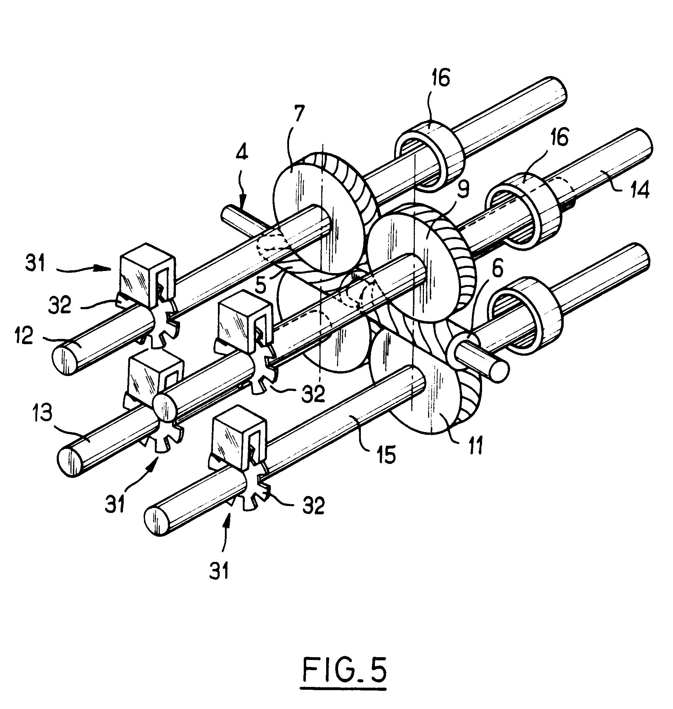

Dans la forme de réalisation représentée à la Fig.5, le dispositif de commande diffère de celui de la Fig.4 par le fait que les potentiomètres 26 et leurs réducteurs 25 sont remplacés pour chaque arbre, par un distributeur d'impulsions 31. Ces distributeurs d'impulsions peuvent être constitués par exemple par une roue dentée 32 fixée à l'arbre correspondant 12, 13, 14, 15 et par un organe 33 de comptage des impulsions générées par la rotation de l'arbre et de sa roue dentée 32. Ces organes de comptage 33 sont d'un type connu en soi, par exemple à cellule photoélectrique, et ne nécessitent pas de description. Chaque distributeur 31 permet donc de repérer séparément la position de chaque élément commandé par l'arbre correspondant.

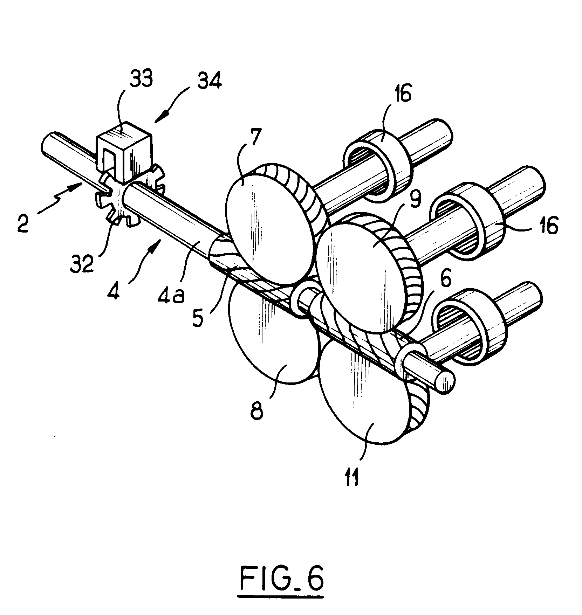

Dans l'autre mode de réalisation illustré à la Fig.6, les quatre distributeurs d'impulsions 31 sont remplacés par un distributeur 34 unique, du même type, disposé sur l'arbre d'entrée 2 et plus précisément sur la partie lisse 4a de l'arbre rigide 4 portant les vis 5 et 6. Ce distributeur 34 permet, en relation avec la commande du commutateur (non représenté) de fonction, de repérer séparément la position de chaque fonction.

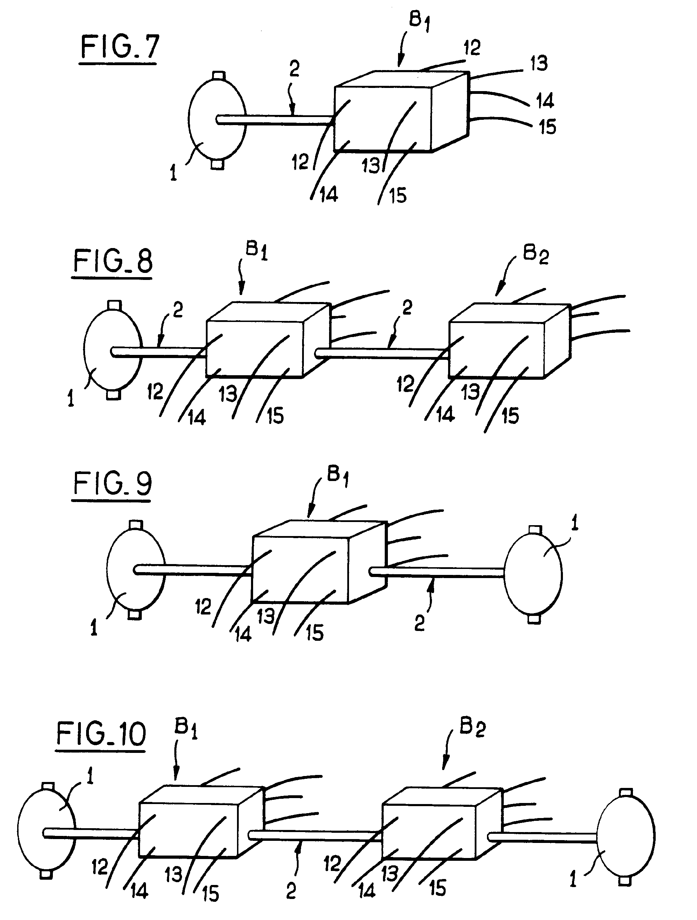

Les Fig.7 à 10 montrent différentes possibilités de réalisation d'ensembles incorporant des dispositifs de commande selon l'invention.

La Fig. 7 montre schématiquement un ensemble comprenant un moteur 1 coopérant avec un boîtier répartiteur B1 similaire à celui représenté aux Fig.1 à 6, et qui possède donc quatre arbres de sortie 12, 13, 14, 15 correspondant à quatre fonctions.

La Fig.8 montre un ensemble comportant un moteur 1 et deux boîtiers répartiteurs de fonctions B1 et B2, un arbre d'entrée 2 entraîné par le moteur 1, traversant les deux répartiteurs B1, B2 et portant deux paires de vis 5, 6 coopérant chacune avec un répartiteur B1 et B2 (le boîtier répartiteur B2 étant semblable au boîtier B1). Cet ensemble possède donc huit fonctions, dont l'une quelconque peut être obtenue. Plusieurs fonctions peuvent de plus être obtenues simultanément si le sens de rotation demandé pour chacune est compatible avec les sens de rotation des autres.

Les ensembles des Fig.9 et 10 comportent chacun deux moteurs. L'ensemble de la Fig.9 possède deux moteurs 1 ayant un arbre de sortie 2 commun portant une paire de vis 5, 6 qui coopère avec un boîtier répartiteur B1. Les deux moteurs 1 peuvent être reliés en série ou en parallèle, et permettent de disposer de quatre caractéristiques vitesse/couple. L'un des deux moteurs peut être alimenté sous tension totale, tandis que l'autre est déconnecté. D'autres caractéristiques peuvent être obtenues si le moteur non utilisé sert de frein, par exemple pour un appui-tête de siège.

Dans la réalisation de la Fig.10, l'ensemble comprend deux répartiteurs de fonctions B1 et B2 reliés par un même arbre 2 portant deux paires de vis 5, 6 coopérant chacune avec un répartiteur B1 et B2, et deux moteurs 1 sont liés aux extrémités opposées de l'arbre commun 2.

Selon d'autres variantes possibles, on peut utiliser deux systèmes séparés constitués chacun d'un moteur et d'un boîtier répartiteur à quatre fonctions. Cette variante correspond à une duplication du dispositif de la Fig.7, et permet de demander simultanément deux fonctions quels que soit leurs sens. Il est également possible de réaliser une duplication du système de la Fig.9 avec indépendance des deux ensembles, et choix de la caractéristique vitesse/couple.

## Revendications

1. Dispositif de commande motorisée d'un ensemble d'éléments formant des parties réglables d'un siège de véhicule, caractérisé en ce qu'il comprend :
- au moins un moteur (1) muni d'un arbre de sortie (2) portant deux vis coaxiales (5, 6), décalées axialement sur l'arbre de sortie et à pas de vis opposés, ces vis formant l'entrée du dispositif,
- des paires de roues (7, 9, 8, 11) engrenant avec les vis et deux à deux entre elles,
- un arbre de sortie (12, 13, 14, 15) traversant librement chaque roue (7,8; 9,11), et destiné à commander un élément associé, par l'une et/ou l'autre de ses extrémités opposées,
- sur chaque arbre (12...15) et en regard de chaque roue (7...11), un embrayage (E1, E2, E3, E4) indépendant des autres embrayages et adapté pour pouvoir lier en rotation l'arbre choisi à la roue correspondante, l'ensemble des roues, des arbres et des embrayages associés formant un répartiteur de fonctions.

2. Dispositif selon la revendication 1, caractérisé en ce que chaque embrayage (E1...E4) comporte un manchon (16) coaxial à l'arbre (12, 13, 14, 15), solidaire en rotation de celui-ci et monté coulissant axialement entre la roue (7...11) associée et une butée (17) fixée à l'arbre, ainsi qu'un organe élastique (18) sollicitant constamment le manchon en coulissement axial d'une position désolidarisée avec la roue (7...11) vers une position embrayée avec la roue, cet embrayage étant équipé en outre d'un moyen (24) de retenue du manchon dans sa position débrayée, tel qu'une fourchette (24) mobile axialement.

3. Dispositif selon la revendication 2, caractérisé en ce que le manchon (16) est lié en rotation à l'arbre (12...15) par un système de cannelures axiales complémentaires (21, 22) agencées sur l'arbre (12...15) et dans le manchon.

4. Dispositif selon l'une des revendications 2 et 3, caractérisé en ce que la roue (7...11) est munie d'un crabot (23) d'embrayage du manchon (16) sur la roue.

5. Dispositif selon l'une des revendications 2 à 4, caractérisé en ce que l'organe élastique est un ressort hélicoïdal (18) enveloppant l'arbre (12...) et comprimé entre un épaulement (17) fixé à l'arbre et un appui annulaire (19) du manchon, l'épaulement (17) constituant la butée axiale du manchon.

6. Dispositif selon l'une des revendications 2 à 5, caractérisé en ce que chaque arbre de sortie (12...) est un câble tournant souple, apte à être relié par ses extrémités opposées à chaque élément à commander.

7. Dispositif selon l'une des revendications 1 à 6, caractérisé en ce que chaque arbre de sortie (12...15) est relié à un réducteur (25) de commande d'un potentiomètre (26) pouvant délivrer une information indiquant la position de l'élément correspondant.

8. Dispositif selon la revendication 7, caractérisé en ce que tous les potentiomètres (26) ont leurs bornes plus et moins respectivement reliées par un fil.

9. Dispositif selon l'une quelconque des revendications 1 à 6, caractérisé en ce que chaque arbre de sortie (12...15) est muni d'un distributeur (31) d'impulsions, par exemple une roue dentée (3) fixée à l'arbre, associée à un organe (33) de comptage des impulsions.

10. Dispositif selon l'une des revendications 1 à 6, caractérisé en ce que l'arbre d'entrée (2), constitué par l'arbre du moteur d'entraînement (1), porte un distributeur d'impulsions (34), tel qu'une roue dentée (32) fixée à l'arbre, associé à un organe (33) de comptage des impulsions, et qui permet de repérer séparément la position de chaque élément commandé.

11. Ensemble comportant deux répartiteurs de fonctions (B1, B2) conformes chacun à l'une des revendications 1 à 10, un arbre d'entrée (2) entraîné par un moteur (1) et portant deux paires de vis (5, 6), chaque paire étant associée à un répartiteur de fonctions (Fig.8).

12. Ensemble comportement un répartiteur de fonctions (B1) selon l'une des revendications 1 à 10, et deux moteurs (1) à arbre de sortie (2) commun portant une paire de vis (5, 6) coopérant avec le répartiteur (B1) (Fig.9).

13. Ensemble comportant deux répartiteurs (B1, B2) selon l'une des revendications 1 à 10, reliés par un même arbre (2) portant les deux paires de vis (5, 6) coopérant chacune avec un répartiteur, et deux moteurs (1) liés aux extrémités opposées de cet arbre commun (Fig.10).

## Patentansprüche

1. Motorisierte Steuervorrichtung für eine Gesamtheit von Elementen, die einstellbare Teile eines Fahrzeugsitzes bilden, dadurch gekennzeichnet, daß sie
wenigstens einen Motor (1), der mit einer Ausgangswelle (2) versehen ist, welche zwei koaxiale Schnecken (5, 6) trägt, die auf der Ausgangswelle axial versetzt sind und entgegengesetzte Gänge haben, wobei diese Schnecken den Eingang der Vorrichtung bilden,
Paare von Rädern (7, 9, 8, 11), die mit den Schnecken und paarweise miteinander im Eingriff sind,
eine Ausgangswelle (12, 13, 14, 15), die jedes Rad (7, 8; 9, 11) frei durchsetzt und dazu bestimmt ist, ein zugeordnetes Element über das eine und/oder andere seiner entgegengesetzten Enden zu steuern,
auf jeder Welle (12...15) und an jedem Rad (7...11) eine Kupplung (E1, E2, E3, E4), die von den anderen Kupplungen unabhängig ist und so eingerichtet ist, daß sie die ausgewählte Welle mit dem entsprechenden Rad drehfest verbinden kann, wobei die Gesamtheit aus Rädern, Wellen und zugehörigen Kupplungen einen Funktionsverteiler bilden, aufweist.

2. Vorrichtung nach Anspruch 1, dadurch gekennzeichnet, daß jede Kupplung (E1...E4) eine zur Welle (12, 13, 14, 15) koaxiale Muffe (16), die mit dieser drehfest und zwischen dem zugeordneten Rad (7...11) und einem auf der Welle befestigten Anschlag (17) axial verschiebbar ist, sowie ein elastisches Element (18), welches die Muffe beständig in axialer Gleitung aus einer vom Rad (7...11) gelösten Stellung in eine mit dem Rad gekuppelte Stellung belastet, aufweist, wobei diese Kupplung ferner mit Rückhaltemitteln (24) zum Rückhalten der Muffe in ihrer ausgerückten Stellung, wie etwa einer axial beweglichen Gabel (24) versehen ist.

3. Vorrichtung nach Anspruch 2, dadurch gekennzeichnet, daß die Muffe (16) mit der Welle (12...15) durch ein System komplementärer axialer Nuten (21, 22), die auf der Welle (12...15) und in der Muffe ausgebildet sind, drehfest verbunden ist.

4. Vorrichtung nach einem der Ansprüche 2 und 3, dadurch gekennzeichnet, daß das Rad (7...11) mit einer Kupplungsklaue (23) zum Einkuppeln der Muffe (16) am Rad versehen ist.

5. Vorrichtung nach einem der Ansprüche 2 bis 4, dadurch gekennzeichnet, daß das elastische Element eine die Welle (12...) umgebende und zwischen einer auf der Welle angebrachten Schulter (17) und einer ringförmigen Anlage (19) der Muffe zusammengedrückte Schraubenfeder (18) ist, wobei die Schulter (17) den axialen Anschlag der Muffe bildet.

6. Vorrichtung nach einem der Ansprüche 2 bis 5, dadurch gekennzeichnet, daß die Ausgangswelle (12...) ein biegsames Drehkabel ist, das für eine Verbindung über seine entgegengesetzten Enden mit jedem zu steuernden Element eingerichtet ist.

7. Vorrichtung nach einem der Ansprüche 1 bis 6, dadurch gekennzeichnet, daß jede Ausgangswelle (12...15) mit einem Untersetzer (25) zur Steuerung eines Potentiometers (26) verbunden ist, welches eine die Stellung des entsprechenden Elements angebende Information liefern kann.

8. Vorrichtung nach Anspruch 7, dadurch gekennzeichnet, daß die Plus- und Minus-Anschlüsse aller Potentiometer (26) jeweils durch einen Draht verbunden sind.

9. Vorrichtung nach irgendeinem der Ansprüche 1 bis 6, dadurch gekennzeichnet, daß jede Ausgangswelle (12...15) mit einem Impulsverteiler (31), beispielsweise einem auf der Welle befestigten Zahnrad (3), das einer Impulszähleinrichtung (33) zugeordnet ist, versehen ist.

10. Vorrichtung nach einem der Ansprüche 1 bis 6, dadurch gekennzeichnet, daß die durch die Welle des Antriebsmotors (1) gebildete Eingangswelle (2) einen Impulsverteiler (34), wie ein auf der Welle befestigtes Zahnrad (32), dem einer Impulszähleinrichtung (33) zugeordnet ist und der eine getrennte Lagefeststellung für jedes gesteuerte Element gestattet, trägt.

11. Aufbau mit zwei Funktionsverteilern (B1, B2) gemäß einem der Ansprüche 1 bis 10, einer durch einen Motor (1) angetriebenen und zwei Paare von Schnecken (5, 6) tragenden Eingangswelle (2), wobei jedes Paar einem Funktionsverteiler zugeordnet ist (Fig. 8).

12. Aufbau mit einem Funktionsverteiler (B1) gemäß einem der Ansprüche 1 bis 10 und zwei Motoren (1) mit gemeinsamer Ausgangswelle (2), die ein Paar von mit dem Funktionsverteiler (B1) zusammenwirkenden Schnecken (5, 6) trägt (Fig. 9).

13. Aufbau mit zwei Verteilern (B1, B2) nach einem der Ansprüche 1 bis 10, welche über ein und dieselbe Welle (2), die die beiden jeweils mit einem Verteiler zusammenwirkenden Paare von Schnecken (5, 6) trägt, verbunden sind, und zwei an den entgegengesetzten Enden dieser gemeinsamen Welle angeschlossenen Motoren (1) (Fig. 10).

## Claims

1. Device for the motorised control of a set of components forming adjustable parts of a vehicle seat, characterised in that it comprises:
- at least one motor (1) equipped with an output shaft (2) carrying two coaxial worms (5, 6) offset axially on the output shaft and with opposite pitches, these worms forming the input of the device,
- pairs of gears (7, 9, 8, 11) meshing with the worms, mutually in pairs,
- an output shaft (12, 13, 14, 15) passing freely through each gear (7, 8; 9, 11) and intended to control an associated component by one and/or the other of its opposite ends,
- on each shaft (12...15) and facing each gear (7...11), a clutch (E1, E2, E3, E4) independent of the other clutches and adapted in order to be able to connect the selected shaft in rotation to the corresponding gear, all the gears, shafts and associated clutches together forming a function divider.

2. Device according to Claim 1, characterised in that each clutch (E1...E4) includes a sleeve (16) coaxial with the shaft (12, 13, 14, 15), integral in rotation with the latter and mounted so as to slide axially between the associated gear (7...11) and a stop (17) fixed to the shaft, and an elastic member (18) constantly impelling the sleeve to slide axially from a position in which it is disconnected from the gear (7...11) towards a position in which it is engaged with the gear, this clutch furthermore being equipped with a means (24) for holding the sleeve in its disengaged position, such as an axially movable fork (24).

3. Device according to Claim 2, characterised in that the sleeve (16) is linked in rotation to the shaft (12...15) by a system of complementary axial splines (21, 22) arranged on the shaft (12...15) and in the sleeve.

4. Device according to either of Claims 2 and 3, characterised in that the gear (7...11) is equipped with a claw (23) for engaging the sleeve (16) on the gear.

5. Device according to one of Claims 2 to 4, characterised in that the elastic member is a helical spring (18) surrounding the shaft (12...) and compressed between a shoulder (17) fixed to the shaft and an annular bearing piece (19) on the sleeve, the shoulder (17) constituting the axial stop of the sleeve.

6. Device according to one of Claims 2 to 5, characterised in that each output shaft (12...) is a flexible rotating cable capable of being connected at its opposite ends to each component to be controlled.

7. Device according to one of Claims 1 to 6, characterised in that each output shaft (12...15) is connected to a reduction gear (25) for controlling a potentiometer (26) capable of delivering an item of data indicating the position of the corresponding component.

8. Device according to Claim 7, characterised in that all the potentiometers (26) have their positive and negative terminals respectively connected by a wire.

9. Device according to any one of Claims 1 to 6, characterised in that each output shaft (12...15) is equipped with a pulse distributor (31), for example a toothed gear (32) fixed to the shaft and associated with a device (33) for counting the pulses.

10. Device according to one of Claims 1 to 6, characterised in that the input shaft (2), consisting of the shaft of the drive motor (1), carries a pulse distributor (34), such as a toothed gear (32) fixed to the shaft, associated with a device (33) for counting the pulses, and which makes it possible to identify separately the position of each controlled component.

11. Assembly comprising two function dividers (B1, B2), each in accordance with one of Claims 1 to 10, and an input shaft (2) driven by a motor (1) and carrying two pairs of worms (5, 6), each pair being associated with one function divider (Fig 8).

12. Assembly comprising a function divider (B1) according to one of Claims 1 to 10, and two motors (1) with a common output shaft (2) carrying a pair of worms (5, 6) interacting with the divider (B1) (Fig 9).

13. Assembly comprising two dividers (B1, B2) according to one of Claims 1 to 10, connected by one and the same shaft (2) carrying the two pairs of worms (5, 6), each pair interacting with one divider, and two motors (1) linked to the opposite ends of this common shaft (Fig 10).
